# EUROPEAN PATENT APPLICATION

(11) **EP 3 647 076 A1**
(43) Date of publication of application: **06.05.2020**
(21) Application number: 18823732.5
(22) Date of filing: 24.05.2018
(51) Int. Cl.: B60C 9/18, B60C 9/00, B60C 9/22

(54) **REINFORCING MEMBER FOR TIRES AND TIRE USING SAME**

(30) Priority: 30.06.2017 JP 2017129869
(71) Applicant: Bridgestone Corporation, Tokyo 104-8340 (JP)
(72) Inventor: ONOUE, Shingo, Tokyo 104-8340 (JP)
(74) Representative: Oxley, Robin John George
(86) International application number: PCT/JP2018/020080
(87) International publication number: WO 2019/003738

(57) **Abstract**

Provided is a tire reinforcing member that can further improve various tire performances, such as steering stability and ride comfort. Also provided is a tire in which various tire performances, such as steering stability and ride comfort, are further improved by the use of the tire reinforcing member. A tire reinforcing member (10) is formed by laminating two or more layer members (3) each obtained by covering elongated fiber materials (1) with a polymer material (2). The layer members each have a thickness of 0.01 mm to 0.5 mm, and the whole reinforcing member has a thickness of 0.5 mm to 2.0 mm.

## Description

### TECHNICAL FIELD

The present invention relates to a tire reinforcing member (hereinafter, also simply referred to as "reinforcing member") and a tire including the same. More particularly, the present invention relates to: a tire reinforcing member composed of a laminate of layer members each obtained by covering elongated fiber materials with a polymer material; and a tire including the same.

### BACKGROUND ART

A variety of studies have been conducted on tire reinforcing members. For example, as the structure of a belt used as a reinforcing member of a tire for passenger vehicles, a structure in which two or more intersecting belt layers whose reinforcing cord directions intersect with each other are arranged on the crown-portion tire radial-direction outer side of a carcass serving as a tire skeleton member is commonly adopted. In addition, as the structure of a belt, a structure in which upper and lower two belt layers are arranged such that their reinforcing cords intersect with each other, the reinforcing cords being configured to have a spirally wound structure in which they are folded back at the belt layer ends and extend from one belt layer to the other.

For example, Patent Document 1 discloses a technology relating to a planar reinforcing material with improved mechanical properties, which has the shape of a multi-composite band, and it is disclosed therein to use, as a tire belt, a reinforcing material having a structure in which fiber materials are embedded in a thermosetting resin.

### RELATED ART DOCUMENT

### PATENT DOCUMENT

[Patent Document 1] WO 2015/165777

### SUMMARY OF THE INVENTION

### PROBLEMS TO BE SOLVED BY THE INVENTION

However, in recent years, there is an increasing demand for performance improvement in tires, and it is desired to establish a technology of a reinforcing member as well for further improving various tire performances, such as steering stability and ride comfort.

In view of the above, an object of the present invention is to provide: a tire reinforcing member that can further improve various tire performances, such as steering stability and ride comfort; and a tire including the same.

### MEANS FOR SOLVING THE PROBLEMS

The present inventor intensively studied to discover that the above-described problems can be solved by using a tire reinforcing member that is formed by laminating layer members each obtained by covering elongated fiber materials with a polymer material, in which the thickness of the layer members and that of the whole reinforcing member are specified, thereby completing the present invention.

That is, a tire reinforcing member of the present invention is formed by laminating two or more layer members each obtained by covering elongated fiber materials with a polymer material,
the tire reinforcing member being characterized in that the layer members each have a thickness of 0.01 mm to 0.5 mm, and that the whole reinforcing member has a thickness of 0.5 mm to 2.0 mm.

In the present invention, carbon fibers can be preferably used as the fiber materials, and a thermoplastic resin or a thermoplastic elastomer can be preferably used as the polymer material. In the present invention, it is preferred that the fiber materials uniformly exist in the polymer material.

It is also preferred that the reinforcing member of the present invention have a specific tensile strength of 300 MPa or higher and a specific elastic modulus of 5 GPa or higher, both with respect to a tire circumferential direction. Further, in the reinforcing member of the present invention, it is preferred that the fiber materials have a specific tensile strength of 500 MPa or higher and a specific elastic modulus of 5 GPa or higher, and that the polymer material have a specific elastic modulus of 1 MPa or higher. Still further, in the present invention, it is preferred that a volume fraction of the fiber materials contained per unit volume of the layer members be 30 to 80% by volume.

Yet still further, in the present invention, it is preferred that the fiber materials have an extending direction in a range of -10° to +10° with respect to a longitudinal direction of the layer members. Yet still further, in the present invention, it is preferred that the fiber materials include: a component A extending in a direction of +20° to +90° with respect to the longitudinal direction of the layer members; and a component B extending in a direction of -20° to -90° with respect to the longitudinal direction of the layer members, and that an inclination direction of the component A and that of the component B be line-symmetrical with respect to the longitudinal direction of the layer members. In this case, particularly, it is preferred that the component A and the component B be contained in different layer members, or that the component A and the component B be contained in the same layer member.

A tire of the present invention is characterized by including the above-described tire reinforcing member arranged in a crown portion.

### EFFECTS OF THE INVENTION

According to the present invention, a tire reinforcing member that can further improve various tire performances, such as steering stability and ride comfort, and a tire including the same can be realized.

### BRIEF DESCRIPTION OF THE DRAWINGS

[FIG. 1] FIG. 1 is a widthwise cross-sectional view illustrating one example of a tire reinforcing member of the present invention.
[FIG. 2] FIG. 2 is a widthwise cross-sectional view illustrating one example of a tire of the present invention.

### MODE FOR CARRYING OUT THE INVENTION

Embodiments of the present invention will now be described in detail referring to the drawings.

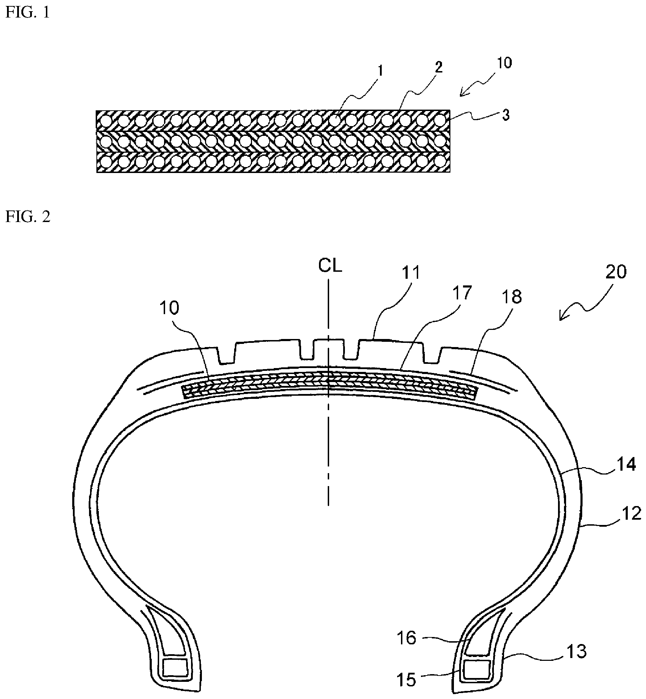

FIG. 1 is a widthwise cross-sectional view illustrating one example of a tire reinforcing member of the present invention. As illustrated, a tire reinforcing member 10 of the present invention assumes the form of a film or a sheet that is obtained by laminating two or more, for example, two to ten, preferably three to five (three in the illustrated example) layer members 3 each formed by covering elongated fiber materials 1 with a polymer material 2.

In the present invention, it is important that the layer members 3 each have a thickness of 0.01 mm to 0.5 mm and the whole reinforcing member 10 has a thickness of 0.5 mm to 2.0 mm. This enables to obtain a reinforcing member that can further improve various tire performances, such as steering stability and ride comfort, while reducing the weight of the reinforcing member 10 itself. Further, a reduction in the weight of the reinforcing member 10 itself can contribute to a reduction in the tire weight. Moreover, by using the reinforcing member 10 of the present invention in place of a conventional belt, the rolling resistance can be reduced and the fuel efficiency can be improved as compared to before.

The thickness of each layer member 3 is required to be 0.01 mm to 0.5 mm, preferably 0.1 mm to 0.3 mm. An excessively small thickness of the layer member 3 leads to an increased number of steps in the molding process for lamination, while an excessively large thickness of the layer member 3 leads to deterioration of the ride comfort due to an increase in the out-of-plane flexural rigidity.

The thickness of the whole reinforcing member 10 of the present invention is required to be 0.5 mm to 2.0 mm, preferably 1.0 mm to 2.0 mm. An increase in the thickness of the reinforcing member 10 tends to improve the steering stability; however, since it also increases the out-of-plane flexural rigidity, which conflicts with the demand for weight reduction, it is necessary to control the thickness to be not greater than 2.0 mm. Meanwhile, when the thickness of the reinforcing member 10 is excessively small, a required rigidity cannot be attained.

In the present invention, specific examples of the fiber materials 1 include carbon fibers (CF), such as polyacrylonitrile (PAN)-based carbon fibers, pitch-based carbon fibers, and rayon-based carbon fibers; glass fibers; metal fibers made of steel or the like; organic fibers such as aramid fibers (aromatic polyamide fibers), polyketone (PK) fibers, poly-p-phenylene benzobisoxazole (PBO) fibers, polyarylate fibers, nylon fibers (aliphatic polyamide fiber), and polyester fibers (e.g., polyethylene terephthalate (PET) fibers); rock fibers (rock wool) such as basalt fibers and andesite fibers, among which carbon fibers can be preferably used. Alternatively, composite fibers made of two or more kinds of the above-described fibers may be used as well.

The thickness of the fiber materials 1 in the layer members 3 is preferably 0.05 mm to 0.3 mm, more preferably 0.1 mm to 0.3 mm.

In the present invention, specific examples of the polymer material 2 include thermoplastic resins, thermoplastic elastomers, thermosetting resins, photocurable resins, and rubber materials, among which thermoplastic resins and thermoplastic elastomers can be preferably used.

Thereamong, as the thermoplastic resins, for example, polyamide resins such as polyamide 66 (PA66), polyether resins such as polyether ether ketones (PEEK), urethane resins, olefin resins, vinyl chloride resins, and polyester resins such as PET can be used.

As the thermoplastic elastomers, for example, amide-based thermoplastic elastomers (TPA), ester-based thermoplastic elastomers (TPC), olefin-based thermoplastic elastomers (TPO), styrene-based thermoplastic elastomers (TPS), urethane-based thermoplastic elastomers (TPU), thermoplastic rubber vulcanizates (TPV), and other thermoplastic elastomers (TPZ), all of which are defined in JIS K6418, can be used.

As the thermosetting resins, for example, phenol resins, urea resins, melamine resins, epoxy resins, and polyester resins can be used.

The reinforcing member 10 of the present invention is composed of the layer members 3 each obtained by covering the fiber materials 1 with the polymer material 2; therefore, it is necessary to ensure the adhesion between the reinforcing member 10 and its surrounding rubber members when the reinforcing member 10 is arranged inside a tire. In this respect, the use of an adhesive may be considered for ensuring the adhesion with rubber and, as the polymer material 2, it is also preferred to use a material that is adhesive with rubber components.

The reinforcing member 10 of the present invention has a specific tensile strength in the tire circumferential direction of preferably 300 MPa or higher, more preferably 800 MPa or higher, still more preferably 1,100 MPa or higher, and the higher the specific tensile strength of the reinforcing member 10, the more preferred it is. Particularly, the specific tensile strength may be 2,500 MPa or less. Further, the reinforcing member 10 of the present invention has a specific elastic modulus in the tire circumferential direction of preferably 5 GPa or higher, more preferably 35 GPa or higher, still more preferably 45 GPa or higher, and the higher the specific elastic modulus, the more preferred it is. Particularly, the specific elastic modulus may be 200 GPa or less. When the specific tensile strength is small, the thickness is increased for ensuring the strength and the rigidity, and this leads an increase in the weight, which is not preferred.

In the present invention, the specific tensile strength of the fiber materials 1 is preferably 500 MPa or higher, more preferably 700 MPa or higher, still more preferably 2,000 MPa or higher, and the higher the specific tensile strength of the fiber materials 1, the more preferred it is. Further, the specific elastic modulus of the fiber materials 1 is preferably 5 GPa or higher, more preferably 8 GPa or higher, still more preferably 95GPa or higher, and the higher the specific elastic modulus of the fiber materials 1, the more preferred it is. When the fiber materials 1 have a specific tensile strength of less than 500 MPa and/or a specific elastic modulus of less than 5 GPa, it is necessary to increase the fiber amount for ensuring the rigidity, and this causes an increase in the weight, which is not preferred.

In the present invention, the specific elastic modulus of the polymer material 2 is preferably 1 MPa or higher, more preferably 100 MPa or higher, and the higher the specific elastic modulus of the polymer material 2, the more preferred it is. When the specific elastic modulus of the polymer material 2 is small, the thickness is increased for ensuring the strength and the rigidity, and this leads an increase in the weight, which is not preferred.

It is noted here that, in the present invention, the specific tensile strength and the specific elastic modulus that are stated for the reinforcing member 10, the fiber materials 1 and the polymer material 2 may be values measured under the conditions having a temperature of 25°C and a humidity of 55% RH in accordance with JIS L1017 and JIS K7113, respectively.

In the present invention, it is preferred that the fiber materials 1 uniformly exist in the polymer material 2. Specifically, for example, the fiber materials 1 are allowed to uniformly exist in a single direction of arrangement in the plane of each layer member 3 by parallelly arranging the fiber materials 1 at regular intervals or without any spacing and embedding these fiber materials 1 in the polymer material 2, or the fiber materials 1 are allowed to exist uniformly in two or more directions of arrangement in the plane of each layer member 3 by preparing a fabric using the fiber materials 1 and embedding this fabric in the polymer material 2.

In the present invention, the volume fraction of the fiber materials 1 contained per unit volume of the layer members 3 is preferably 30 to 80% by volume, particularly preferably 40 to 60% by volume. By controlling the volume fraction of the fiber materials 1 contained per unit volume of the layer members 3 to be in a range of 30 to 80% by volume, the ratio of fibers and a resin is made uniform as a material, which is preferred.

In the reinforcing member of the present invention, the extending direction of the fiber materials 1 is not particularly restricted; however, it is preferably in a range of -10° to +10° with respect to the longitudinal direction of the layer members 3. This enables to ensure the strength and the rigidity in the circumferential direction, which is preferred.

In the reinforcing member 10 of the present invention, the fiber materials 1 may include: a component A extending in a direction of +20° to +90°, particularly +40° to +80°, with respect to the longitudinal direction of the layer members 3; and a component B extending in a direction of -20° to -90°, particularly -40° to -80°, with respect to the longitudinal direction of the layer members 3, and the inclination direction of the component A and that of the component B may be line-symmetrical with respect to the longitudinal direction of the layer members 3. This enables to attain both satisfactory strength and satisfactory shear rigidity in the circumferential direction, which is preferred.

In this case, the component A and the component B may be contained in different layer members 3, or may be contained in the same layer member 3.

FIG. 2 is a widthwise cross-sectional view illustrating a tire for passenger vehicles that is one example of a tire of the present invention. An illustrated tire 20 includes: a tread portion 11 which forms a ground-contact part; a pair of side wall portions 12 which continuously extend inward in the tire radial direction on the respective sides of the tread portion 11; and bead portions 13 which continuously extend on the circumferential inner side of each side wall portion 12. The tread portion 11, the side wall portions 12 and the bead portions 13 are reinforced by a carcass 14 which is composed of at least one carcass ply (e.g., one or two carcass plies; a single carcass ply in the illustrated example) toroidally extending from one bead portion 13 to the other bead portion 13. In the illustrated tire 20, bead cores 15 are each embedded in the pair of the bead portions 13, and the carcass 14 is folded around the bead cores 15 from the inside to the outside of the tire and thereby anchored. In addition, bead fillers 16 are arranged on the tire radial-direction outer side of the respective bead cores 15.

The tire 20 of the present invention is characterized by including the reinforcing member 10 of the present invention that is arranged in a crown portion. In the illustrated example, the reinforcing member 10 of the present invention is arranged on the tire radial-direction outer side of the carcass 14 in the crown portion, in place of a conventional intersecting belt layer. By this, as described above, various tire performances such as steering stability and ride comfort can be further improved.

In the tire of the present invention, as required, one or more cap layers 17 covering the entirety of the reinforcing member 10 in the tire width direction, and one or more layered layers 18 covering the tire width-direction ends of the reinforcing member 10 may be arranged on the tire radial-direction outer side of the reinforcing member 10. Further, an inner liner is usually arranged on the innermost surface of the tire, although not illustrated in the drawing.

The reinforcing member 10 of the present invention can be formed by, for example, but not particularly limited to, winding the layer member 3, which is obtained by covering the fiber materials 1 with the polymer material 2, two or more times in the tire circumferential direction.

### EXAMPLES

The present invention will now be described in more detail by way of Examples thereof.

A tire for passenger vehicles as illustrated in FIG. 2 was produced at a tire size 225/45R17. This tire included: a tread portion forming a ground-contact part; a pair of side wall portions continuously extending inward in the tire radial direction on the respective sides of the tread portion; and bead portions continuously extending on the circumferential inner side of the respective side wall portions, all of which were reinforced with a carcass composed of a single carcass ply toroidally extending from one bead portion to the other bead portion.

Under the respective conditions shown in Table 1 below, tire reinforcing members composed of laminated layer members each prepared by parallelly arranging elongated fiber materials in a single direction at regular intervals and covering them with a polymer material were produced. It is noted here that commercially available products were used as the fiber materials and the polymer material which was a resin material, and rubber materials of Comparative Examples 1 and 2 were produced in accordance with the below-described respective formulations. Further, in those reinforcing members in which a resin material was used as the polymer material, an adhesive was used for ensuring the adhesion with rubber. Hereinafter, the term "part(s)" means "part(s) by mass".

### (Blended Rubber (Hard))

A blended rubber (hard) was prepared by blending 100 parts of a natural rubber with 70 parts of a carbon black [SEAST NC, manufactured by Tokai Carbon Co., Ltd.], 8 parts of zinc oxide, 2 parts of *N*-dicyclohexyl-2-benzothiazolyl sulfenamide as a vulcanization accelerator [trade name: NOCCELER CZ-G, manufactured by Ouchi Shinko Chemical Industrial Co., Ltd.], 1 part of *N*-(2,2'-methylene-bis(4-methyl-6-*tert*-butylphenol)) as an age resistor [trade name: NOCRAC NS-6, manufactured by Ouchi Shinko Chemical Industrial Co., Ltd.], and 4 parts of sulfur.

### (Blended Rubber (Soft))

A blended rubber (soft) was prepared by blending 70 parts of a natural rubber with 30 parts of a styrene-butadiene rubber [JSR1778, manufactured by JSR Corporation], 50 parts of a carbon black [SEAST NC, manufactured by Tokai Carbon Co., Ltd.], 4 parts of zinc oxide, 1 part of dibenzothiazolyl disulfide as a vulcanization accelerator [trade name: NOCCELER DM-P, manufactured by Ouchi Shinko Chemical Industrial Co., Ltd.], 1 part of polymerized trimethyl dihydroquinoline as an age resistor [trade name: NONFLEX RD-S, manufactured Seiko Chemical Co., Ltd.], and 3 parts of sulfur.

The thus obtained tire reinforcing members were each arranged on the tire radial-direction outer side of the carcass in the crown portion to produce test tires of Examples and Comparative Examples.

For each of the thus obtained tires, the steering stability and the ride comfort were evaluated as follows. The results thereof are shown together in Tables below.

### <Evaluation of Steering Stability and Ride Comfort>

The test tires were each mounted on an actual vehicle, and the steering stability and the ride comfort were evaluated based on the driver's feel during actual driving of the vehicle on a circuit. Evaluations were indicated as indices, taking the evaluation on the tire of Comparative Example 4 as 100. A larger value represents a better evaluation.

**[Table 1]**

| | Comp. Example 1 | Comp. Example 2 | Comp. Example 3 | Example 1 | Example 2 | Comp. Example 4 | Comp. Example 5 |
|---|---|---|---|---|---|---|---|
| Type of fiber material | carbon fiber | carbon fiber | carbon fiber | carbon fiber | carbon fiber | carbon fiber | carbon fiber |
| Specific tensile strength of fiber materials (MPa) | 2,500 | 2,500 | 2,500 | 2,500 | 2,500 | 2,500 | 2,500 |
| Specific elastic modulus of fiber materials (GPa) | 300 | 300 | 300 | 300 | 300 | 300 | 300 |
| Type of polymer material | blended rubber (hard) | blended rubber (soft) | PA66 | PA66 | PA66 | PA66 | PA66 |
| Specific tensile strength of polymer material (MPa) | 1 | 1 | 50 | 50 | 50 | 50 | 50 |
| Specific elastic modulus of polymer material (MPa) | 10 | 1 | 2,000 | 2,000 | 2,000 | 2,000 | 2,000 |
| Volume fraction of fiber materials (% by volume) | 60 | 60 | 60 | 60 | 60 | 60 | 60 |
| Specific tensile strength of reinforcing member (MPa, tire circumferential direction) | 700 | 500 | 900 | 1,300 | 1,000 | 1,300 | 1,300 |
| Specific elastic modulus of reinforcing member (GPa, tire circumferential direction) | 30 | 15 | 50 | 100 | 60 | 100 | 100 |
| Thickness of layer member (mm) | 0.3 | 0.3 | 0.3 | 0.3 | 0.3 | 1 | 1 |
| Number of laminated layer members | 10 | 10 | 10 | 3 | 3 | 1 | 2 |
| Thickness of reinforcing member (mm) | 3 | 3 | 3 | 1 | 1 | 1 | 2 |
| Orientation angle of fiber materials (angle (°) with respect to tire circumferential direction)^{*1} | 0/45/- 45/45/- 45/45/- 45/45/- 45/0 | 0/45/- 45/45/- 45/45/- 45/45/- 45/0 | 0/45/- 45/45/- 45/45/- 45/45/- 45/0 | 0/0/0 | 0/45/-45 | 0 | 0/0 |
| Steering stability (index) | 105 | 95 | 108 | 106 | 111 | 100 | 100 |
| Ride comfort (index) | 97 | 98 | 96 | 108 | 108 | 100 | 100 |

| | | | | | | | |
|---|---|---|---|---|---|---|---|
| ^{*1)} Indicating the angles of the respective layer members in the order of from the outer side to the inner side in the tire radial direction. | | | | | | | |

**[Table 2]**

| | Example 3 | Example 4 | Example 5 | Example 6 |
|---|---|---|---|---|
| Type of fiber material | carbon fiber | carbon fiber | aramid fiber | PET fiber |
| Specific tensile strength of fiber materials (MPa) | 2,500 | 2,500 | 2,500 | 800 |
| Specific elastic modulus of fiber materials (GPa) | 300 | 300 | 100 | 10 |
| Type of polymer material | PEEK | PA66 | PA66 | PET |
| Specific tensile strength of polymer material (MPa) | 100 | 50 | 50 | 100 |
| Specific elastic modulus of polymer material (MPa) | 2,500 | 2,000 | 2,000 | 2,500 |
| Volume fraction of fiber materials (% by volume) | 60 | 60 | 60 | 60 |
| Specific tensile strength of reinforcing member (MPa, tire circumferential direction) | 1,000 | 1,300 | 1,300 | 500 |
| Specific elastic modulus of reinforcing member (GPa, tire circumferential direction) | 70 | 40 | 50 | 5 |
| Thickness of layer member (mm) | 0.3 | 0.3 | 0.3 | 0.3 |
| Number of laminated layer members | 3 | 3 | 3 | 6 |
| Thickness of reinforcing member (mm) | 1 | 1 | 1 | 2 |
| Orientation angle of fiber materials (angle (°) with respect to tire circumferential direction)^{*1} | 0/45/-45 | (0.90)/ (+45,-45)/ (+45,-45) fabric lamination ^{*2} | 0/0/0 | 0/0/0/0/0/0 |
| Steering stability (index) | 113 | 108 | 111 | 106 |
| Ride comfort (index) | 106 | 108 | 108 | 106 |

| | | | | |
|---|---|---|---|---|
| ^{*2)} A case where components A and B extending in different directions with respect to the longitudinal direction of the layer members were contained in the same layer member. | | | | |

As shown in Tables above, it was confirmed that the steering stability and the ride comfort were improved in the tires of Examples in which a reinforcing member, which was constituted by a laminate of two or more layer members composed of fiber materials and a polymer material that satisfied the prescribed thickness conditions, was used in place of a belt.

### DESCRIPTION OF SYMBOLS

1: fiber material
2: polymer material
3: layer member
10: tire reinforcing member
11: tread portion
12: side wall portion
13: bead portion
14: carcass
15: bead core
16: bead filler
17: cap layer
18: layered layer
20: tire for passenger vehicles

## Claims

1. A tire reinforcing member formed by laminating two or more layer members each obtained by covering elongated fiber materials with a polymer material, wherein
the layer members each have a thickness of 0.01 mm to 0.5 mm, and
the whole reinforcing member has a thickness of 0.5 mm to 2.0 mm.

2. The tire reinforcing member according to claim 1, wherein the fiber materials are carbon fibers.

3. The tire reinforcing member according to claim 1 or 2, wherein the polymer material is a thermoplastic resin or a thermoplastic elastomer.

4. The tire reinforcing member according to any one of claims 1 to 3, wherein the fiber materials uniformly exist in the polymer material.

5. The tire reinforcing member according to any one of claims 1 to 4, having a specific tensile strength of 300 MPa or higher and a specific elastic modulus of 5 GPa or higher, both with respect to a tire circumferential direction.

6. The tire reinforcing member according to any one of claims 1 to 5, wherein the fiber materials have a specific tensile strength of 500 MPa or higher and a specific elastic modulus of 5 GPa or higher.

7. The tire reinforcing member according to any one of claims 1 to 6, wherein the polymer material has a specific elastic modulus of 1 MPa or higher.

8. The tire reinforcing member according to any one of claims 1 to 7, wherein a volume fraction of the fiber materials contained per unit volume of the layer members is 30 to 80% by volume.

9. The tire reinforcing member according to any one of claims 1 to 8, wherein the fiber materials have an extending direction in a range of -10° to +10° with respect to a longitudinal direction of the layer members.

10. The tire reinforcing member according to any one of claims 1 to 8, wherein
the fiber materials comprise: a component A extending in a direction of +20° to +90° with respect to the longitudinal direction of the layer members; and a component B extending in a direction of -20° to -90° with respect to the longitudinal direction of the layer members, and
an inclination direction of the component A and that of the component B are line-symmetrical with respect to the longitudinal direction of the layer members.

11. The tire reinforcing member according to claim 10, wherein the component A and the component B are contained in different layer members.

12. The tire reinforcing member according to claim 10, wherein the component A and the component B are contained in the same layer member.

13. A tire comprising the tire reinforcing member according to any one of claims 1 to 12 that is arranged in a crown portion.
